# EUROPEAN PATENT SPECIFICATION

(11) **EP 1 279 330 B1**
(45) Date of publication and mention of the grant of the patent: **29.09.2004**
(21) Application number: 02079496.2
(22) Date of filing: 01.07.1999
(51) Int. Cl.: A01J 7/02, A01J 7/04

(54) **An implement for milking and/or cleaning the udder and/or teats of animals, and a teat cup**
Vorrichtung zum Melken von Tieren und/oder zum Reinigen des Euters und/oder der Zitzen von Tieren, und Melkbecher
Dispositif pour traire et/ou nettoyer les pis et/ou trayons d'animaux et gobelet trayeur

(30) Priority: 06.07.1998 NL 1009561; 15.07.1998 NL 1009663
(43) Date of publication of application: 29.01.2003
(62) Divisional of application: 99931584.9
(73) Proprietor: MAASLAND N.V., 3147 PA Maassluis (NL)
(72) Inventor: Van den Berg, Karel, 2971 BR Bleskensgraaf (NL); Otten, Martijn, 3036 LV Rotterdam (NL)
(74) Representative: Corten, Maurice Jean F.M.

(56) References cited:
- EP-A- 0 819 388
- DATABASE WPI Section PQ, Week 8549 Derwent Publications Ltd., London, GB; Class P13, AN 85-309298 XP002094675 & SU 1 159 521 A (LATV AGRIC ACAD), 7 June 1985 (1985-06-07)

## Description

The invention relates to an implement for milking and/or cleaning the udder and/or the teats of animals.

Such an implement is known.

In such an implement a cleaning and/or disinfecting fluid is usually applied, having the disadvantage of being rather time-consuming and of eliminating not all the undesired micro-organisms.

The invention aims at providing an implement in which the above-mentioned drawbacks do not occur or are at least minimized.

In accordance with the invention this is achieved by an implement as defined in claim 1. According to an inventive feature, the light source transmits ultraviolet rays, having a wavelength ranging between 100 and 280 nanometres.

Light having such a wavelength, also called UVC-light, appears to be particularly effective for eliminating undesired bacteria, such as the common E-coli bacterium. In this manner a so-called cross-infection between the animals, caused by the fact that the various parts of the milking machine and/or the cleaning device come into contact with the teats and/or the udder of various animals, is prevented.

From the Russian patent 1159521 it is known per se to apply a UV-lamp in a milk tank for the purpose of killing the bacteria present therein.

In another embodiment of the invention the light source is disposed in the pulsation space. In a simple embodiment of the invention, according to an inventive feature, at least part of the liner is made of a transparent material letting UV-rays through. For the purpose of avoiding in particular cross infection, the light source is arranged or disposed in the teat cup in such a manner that at least the upper part of the liner that comes into contact with the teat and/or the udder is exposed to the light of the light source.

In accordance with an inventive feature, the disinfecting device comprises a tubular light source. The tubular light source can be inserted in a simple manner into the teat cup. In another embodiment of the invention, the light source is designed as an optical cable, such as a glass fibre cable.

The invention also relates to a teat cup provided with a disinfecting device as described above.

The invention will now be explained in further detail with reference to the accompanying drawing.

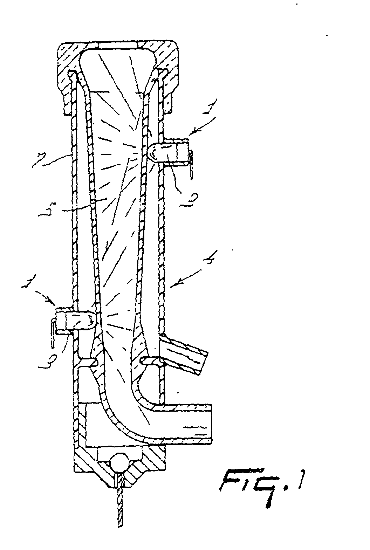

Figure 1 shows a teat cup with the disinfecting device according to the invention included therein.

Figure 1 shows a first embodiment in which the disinfecting device 1 is designed as a pin-shaped element 2 whose end is provided with a UVC-light source 3.

Figure 1 is a cross-section of a teat cup 4 provided with a liner 5. The disinfecting device 1 comprises two UVC-light sources 3. The UVC-light sources 3 are connected to a (non-shown) energy source.

In Figure 1 the disinfecting device 1 is included in the teat cup 4. The disinfecting device 1 comprises two UVC-light sources 3. The first light source 3 is disposed in the outer wall 7 of the teat cup 4 near the upper side thereof, whereas the second light source 3 is disposed in the outer wall 7 of the teat cup 4 near the lower side thereof. In order to obtain a proper disinfection of the liner 5 the latter is made of transparent material in the present embodiment. However, it will be obvious that it is also possible to arrange the UVC-light sources 3 in the liner 5 in such a manner that they are able to irradiate the interior of the liner 5.

## Claims

1. An implement for milking and/or cleaning the udder and/or the teats of animals, comprising a milking machine and/or a cleaning device for cleaning the udder and/or the teats of an animal, being provided with at least one teat cup (4) and at least one disinfecting device (1) provided with at least one light source (3) transmitting ultraviolet rays, said light source (3) being disposed in the teat cup (4).

2. An implement as claimed in claim 1, **characterized in that** the light source (3) is disposed in the pulsation space.

3. An implement as claimed in claim 1 or 2, **characterized in that** at least part of the liner (5) of the teat cup (4) is made of a transparent material letting UV-rays through.

4. An implement as claimed in claim 1, 2 or 3, **characterized in that** the rays have a wavelength ranging between 100 and 280 nanometres.

5. An implement as claimed in any one of claims 1 - 4, **characterized in that** the light source (3) is arranged or disposed in the teat cup (4) in such a manner that at least the upper part of the liner (5) that comes into contact with a teat and/or an udder is exposed to the light of the light source (3).

6. An implement as claimed in any one of the preceding claims, **characterized in that** the disinfecting device (1) comprises a tubular light source.

7. An implement as claimed in any one of the preceding claims, **characterized in that** the light source (3) is designed as an optical cable, such as a glass fibre cable.

8. A teat cup provided with a disinfecting device provided with at least one light source (3) transmitting ultraviolet rays, said light source (3) being disposed in the teat cup (4).

9. A teat cup as claimed in claim 8, **characterized in that** the light source (3) is disposed in the pulsation space.

10. A teat cup as claimed in claim 8 or 9, **characterized in that** at least part of the liner (5) of the teat cup (4) is made of a transparent material letting UV-rays through.

11. A teat cup as claimed in claim 8, 9 or 10, **characterized in that** the rays have a wavelength ranging between 100 and 280 nanometres.

12. A teat cup as claimed in any one of claims 8 - 11, **characterized in that** the light source (3) is arranged or disposed in the teat cup (4) in such a manner that at least the upper part of the liner (5) that comes into contact with a teat and/or an udder is exposed to the light of the light source (3).

13. A teat cup as claimed in any one of claims 8 - 12, **characterized in that** the disinfecting device (1) comprises a tubular light source.

14. A teat cup as claimed in any one of claims 8 - 13, **characterized in that** the light source (3) is designed as an optical cable, such as a glass fibre cable.

## Patentansprüche

1. Vorrichtung zum Melken und/oder Reinigen des Euters und/oder der Zitzen von Tieren, die eine Melkmaschine und/oder eine Reinigungsvorrichtung zum Reinigen des Euters und/oder der Zitzen eines Tieres umfaßt und mit mindestens einem Zitzenbecher (4) und mindestens einer Desinfektionsvorrichtung (1) versehen ist, die mindestens eine ultraviolette Strahlen aussendende Lichtquelle (3) aufweist, wobei die Lichtquelle (3) in dem Zitzenbecher (4) angeordnet ist.

2. Vorrichtung nach Anspruch 1,
**dadurch gekennzeichnet, daß** die Lichtquelle (3) im Pulsierraum angeordnet ist.

3. Vorrichtung nach Anspruch 1 oder 2,
**dadurch gekennzeichnet, daß** zumindest ein Teil der Auskleidung (5) des Zitzenbechers (4) aus einem transparenten Material besteht, das UV-Strahlen durchläßt.

4. Vorrichtung nach Anspruch 1, 2 oder 3,
**dadurch gekennzeichnet, daß** die Strahlen einen Wellenlängenbereich zwischen 100 und 280 Nanometern aufweisen.

5. Vorrichtung nach einem der Ansprüche 1 bis 4,
**dadurch gekennzeichnet, daß** die Lichtquelle (3) in dem Zitzenbecher (4) derart angeordnet oder angebracht ist, daß zumindest der obere Teil der Auskleidung (5), der mit einer Zitze und/oder einem Euter in Kontakt kommt, dem Licht der Lichtquelle (3) ausgesetzt ist.

6. Vorrichtung nach einem der vorhergehenden Ansprüche,
**dadurch gekennzeichnet, daß** die Desinfektionsvorrichtung (1) eine rohrförmige Lichtquelle umfaßt.

7. Vorrichtung nach einem der vorhergehenden Ansprüche,
**dadurch gekennzeichnet, daß** die Lichtquelle (3) als Lichtleiterkabel, wie z. B. Glasfaserkabel, ausgeführt ist.

8. Zitzenbecher mit einer Desinfektionsvorrichtung, die mit mindestens einer ultraviolette Strahlen aussendenden Lichtquelle (3) versehen ist, wobei die Lichtquelle (3) in dem Zitzenbecher (4) angeordnet ist.

9. Zitzenbecher nach Anspruch 8,
**dadurch gekennzeichnet, daß** die Lichtquelle (3) im Pulsierraum angeordnet ist.

10. Zitzenbecher nach Anspruch 8 oder 9,
**dadurch gekennzeichnet, daß** zumindest ein Teil der Auskleidung (5) des Zitzenbechers (4) aus einem transparenten Material besteht, das UV-Strahlen durchläßt.

11. Zitzenbecher nach Anspruch 8, 9 oder 10,
**dadurch gekennzeichnet, daß** die Strahlen einen Wellenlängenbereich zwischen 100 und 280 Nanometern aufweisen.

12. Zitzenbecher nach einem der Ansprüche 8 bis 11,
**dadurch gekennzeichnet, daß** die Lichtquelle (3) in dem Zitzenbecher (4) derart angeordnet oder angebracht ist, daß zumindest der obere Teil der Auskleidung (5), der mit einer Zitze und/oder einem Euter in Kontakt kommt, dem Licht der Lichtquelle (3) ausgesetzt ist.

13. Zitzenbecher nach einem der Ansprüche 8 bis 12,
**dadurch gekennzeichnet, daß** die Desinfektionsvorrichtung (1) eine rohrförmige Lichtquelle umfaßt.

14. Zitzenbecher nach einem der Ansprüche 8 bis 13,
**dadurch gekennzeichnet, daß** die Lichtquelle (3) als Lichtleiterkabel, wie z. B. Glasfaserkabel, ausgeführt ist.

## Revendications

1. Outil pour traire et/ou nettoyer les pis et/ou les trayons d'animaux, comprenant une machine à traire et/ou un dispositif de nettoyage pour nettoyer les pis et/ou les trayons d'un animal, étant pourvu d'au moins un gobelet trayeur (4) et d'au moins un dispositif de désinfection (1) doté d'au moins une source lumineuse (3) transmettant des rayons ultraviolets, ladite source lumineuse (3) étant disposée dans le gobelet trayeur (4).

2. Outil selon la revendication 1, **caractérisé en ce que** la source lumineuse (3) est disposée dans l'espace de pulsation.

3. Outil selon l'une quelconque des revendications 1 et 2, **caractérisé en ce qu'**au moins une partie du revêtement (5) du gobelet trayeur (4) est constituée d'un matériau transparent perméable aux rayons ultraviolets.

4. Outil selon l'une quelconque des revendications 1 à 3, **caractérisé en ce que** les rayons ont une longueur d'onde comprise dans la gamme allant de 100 à 280 nanomètres.

5. Outil selon l'une quelconque des revendications 1 à 4, **caractérisé en ce que** la source lumineuse (3) est agencée ou disposée dans le gobelet trayeur (4) de telle manière qu'au moins la partie supérieure du revêtement (5) venant au contact d'un trayon et/ou d'un pis est exposée à la lumière de la source lumineuse (3).

6. Outil selon l'une quelconque des revendications précédentes, **caractérisé en ce que** le dispositif de désinfection (1) comprend une source lumineuse tubulaire.

7. Outil selon l'une quelconque des revendications précédentes, **caractérisé en ce que** la source lumineuse (3) est conçue comme un câble optique, tel qu'un câble à fibres de verre.

8. Gobelet trayeur doté d'un dispositif de désinfection pourvu d'au moins une source lumineuse (3) transmettant des rayons ultraviolets, ladite source lumineuse (3) étant disposée dans le gobelet trayeur (4).

9. Gobelet trayeur selon la revendication 8, **caractérisé en ce que** la source lumineuse (3) est disposée dans l'espace de pulsation.

10. Gobelet trayeur selon l'une quelconque des revendications 8 et 9, **caractérisé en ce qu'**au moins une partie du revêtement (5) du gobelet trayeur (4) est constituée d'un matériau transparent perméable aux rayons ultraviolets.

11. Gobelet trayeur selon l'une quelconque des revendications 8 à 10, **caractérisé en ce que** les rayons ont une longueur d'onde comprise dans la plage allant de 100 à 280 nanomètres.

12. Gobelet trayeur selon l'une quelconque des revendications 8 à 11, **caractérisé en ce que** la source lumineuse (3) est agencée ou disposée dans le gobelet trayeur (4) de telle manière qu'au moins la partie supérieure du revêtement (5) venant au contact d'un trayon et/ou d'un pis est exposée à la lumière de la source lumineuse (3).

13. Gobelet trayeur selon l'une quelconque des revendications 8 à 12, **caractérisé en ce que** le dispositif de désinfection (1) comprend une source lumineuse tubulaire.

14. Gobelet trayeur selon l'une quelconque des revendications 8 à 13, **caractérisé en ce que** la source lumineuse (3) est conçue comme un câble optique, tel qu'un câble à fibres de verre.
